Europäisches Patentamt

European Patent Office

Office européen des brevets

(19)

(11) **EP 0 995 492 B1**

(12) **FASCICULE DE BREVET EUROPEEN**

(45) Date de publication et mention
de la délivrance du brevet:
**28.05.2003 Bulletin 2003/22**

(51) Int Cl.7: **B01J 20/00**, A62D 3/00

(21) Numéro de dépôt: **99402557.5**

(22) Date de dépôt: **18.10.1999**

(54) **Produit capable de transformer un produit liquide toxique, corrosif ou nuisible pour l'environnement en résidu non agressif ou non nuisible.**

Mittel zur Transformation eines flüssigen, toxischen, korrosiven oder umweltgefährdenden Stoffes in einem nicht-aggressiven oder ungefährlichen Rückstand

Product able to transform a toxic, corrosive or environmentally harmful liquid product into a non-aggressive or harmless residue

(84) Etats contractants désignés:
**AT BE CH CY DE DK ES FI FR GB GR IE IT LI LU MC NL PT SE**

(30) Priorité: **19.10.1998 FR 9813070**

(43) Date de publication de la demande:
**26.04.2000 Bulletin 2000/17**

(73) Titulaire: **Meyer, Marie-Claude, née Blomet**
**95760 Valmondois (FR)**

(72) Inventeurs:
• **Meyer, Marie-Claude**
**75015 Paris (FR)**

• **Mathieu, Laurence**
**95800 Courdimanche (FR)**
• **Blomet, Jöel**
**95760 Valmondois (FR)**

(74) Mandataire: **Boulinguiez, Didier**
**Cabinet Plasseraud**
**84, rue d'Amsterdam**
**75440 Paris Cedex 09 (FR)**

(56) Documents cités:
**EP-A- 0 398 538**          **FR-A- 2 602 677**
**US-A- 4 948 818**          **US-A- 5 126 309**
**US-A- 5 342 543**

Printed by Jouve, 75001 PARIS (FR)

**Description**

L'invention a pour objet un produit capable de transformer un produit liquide toxique, corrosif ou nuisible pour l'environnement en résidu non agressif ou non nuisible.

Il arrive que des produits liquides toxiques, corrosifs ou nuisibles pour l'environnement tels que des acides forts, des bases fortes, des oxydants et des réducteurs puissants, des solvants, des huiles, des graisses se répandent sur les paillasses ou sur le sol lors de leur manipulation en laboratoire ou dans les usines ou lors de leur transport. Il est très important alors de pouvoir les éliminer et nettoyer rapidement.

Selon le type de produits liquides renversés, différents types de produits et procédés de nettoyage sont utilisés.

Par exemple, le nettoyage des produits acides ou alcalins est habituellement réalisé par lavage à grande eau. Cependant, ceci nécessite de grandes quantités d'eau, une éventuelle évacuation du laboratoire ou de l'usine. Ou bien encore, il est possible de pomper de tels produits liquides. Cependant, le choix de la pompe dépend de la nature du produit qui s'est répandu. Une autre solution consiste à déverser sur le produit toxique ou corrosif du sable ou de l'argile ou un absorbant ou superabsorbant, puis de balayer l'ensemble. Cependant, les résidus ainsi obtenus restent agressifs, un matériel adapté est donc nécessaire et les manipulations doivent être faites avec précaution pour éviter tout contact avec une partie du corps du manipulateur, les risques de brûlure ou d'irritation restant importants.

De plus, il n'est pas possible d'utiliser d'absorbants ou de superabsorbants pour le nettoyage d'acides ou de bases fortes. Ces derniers détruisent leurs propriétés absorbantes et les rendent donc inopérationnels.

Ainsi, le choix du mode de nettoyage est conditionné par celui du liquide renversé. Aucun produit ne permet à ce jour de traiter efficacement et de façon universelle tout produit corrosif, dangereux et/ou nuisible pour l'environnement.

Il est du mérite de la Demanderesse d'avoir défini et mis au point un produit capable de transformer un produit liquide toxique, corrosif ou nuisible pour l'environnement en un résidu non agressif et non nuisible caractérisé par le fait qu'il comprend :

- au moins un amphotère choisi de telle sorte que:

    - le pH dudit résidu obtenu soit dans la gamme de 5 à 10, de préférence de 5,5 à 9,7,
    - le plus petit pK acide de l'amphotère soit dans la gamme de 5 à 10, de préférence de 5,5 à 9,7 et le plus grand pK basique de l'amphotère soit dans la gamme de 5 à 10, et de préférence de 5 à 8, et
    - le plus grand pK basique de l'amphotère soit inférieur au plus petit des pK acides,

- au moins un absorbant lipophile, et
- au moins un absorbant hydrophile.

On désigne ici par produit liquide tout produit ayant une consistance liquide, semi-liquide, semi-pâteuse ou pâteuse.

On rappelle qu'un amphotère est une substance ou un ion qui peut jouer tantôt le rôle d'un acide, tantôt le rôle d'une base. Il présente par conséquent au moins deux constantes de dissociation (pK) l'une correspondant à la fonction acide, l'autre à la fonction basique.

On rappelle que le pK est l'opposé du logarithme décimal de la constante de la réaction :

$$\text{acide} \rightarrow \text{base} + H^+$$

On désigne en outre par pK acide, le pK lorsque l'amphotère est l'acide et par pK basique, le pK lorsque l'amphotère est la base.

Selon un mode de réalisation préféré, l'invention a pour objet un produit comprenant au moins deux amphotères choisis de telle sorte et dans des proportions telles que :

- le pH du résidu soit dans la gamme de 5 à 10 et de préférence de 5,5 à 9,7,
- le plus petit des pK acides soit dans la gamme de 5 à 10 et de préférence de 5,5 à 9,7 et le plus grand des pK basiques soit dans la gamme de 5 à 10, et de préférence de 5 à 8,
- le plus grand pK basique soit inférieur au plus petit des pK acides, et
- le rapport de la somme du nombre de moles des amphotères ayant un pK acide dans la gamme de 5 à 10 et de préférence de 5,5 à 9, à la somme du nombre de moles des amphotères ayant un pK basique dans la gamme de 5 à 10, et de préférence de 5 à 8 soit compris entre 0,1 et 10.

Le produit selon la présente invention comprend :

- de 20 à 60% en poids, de préférence de 15 à 55% en poids, et plus préférentiellement encore de 10 à 45% en poids d'au moins un amphotère défini ci-dessus,
- de 2 à 20% en poids, de préférence de 2 à 15% et plus préférentiellement encore de 1 à 10% d'au moins un absorbant lipophile, et
- de 2 à 20% en poids, de préférence de 2 à 15% et plus préférentiellement encore de 1 à 10% d'au moins un absorbant hydrophile.

Dans la plupart des cas, on a recours à au moins deux amphotères différents, dont l'un présente un pK acide et l'autre présente un pK basique répondant aux exigences indiquées plus haut et qui seront appelés pour plus de commodités dans ce qui suit "amphotère anti-base" et "amphotère anti-acide" respectivement.
L'amphotère anti-base et l'amphotère anti-acide sont de préférence non conjugués, c'est-à-dire que l'un ne donne pas l'autre par une réaction acido-basique.
Comme amphotères anti-bases et amphotères antiacides, on peut utiliser ceux décrits dans les brevets FR86 11754, FR86 14042 au nom de la Demanderesse. En particulier, on peut utiliser les amphotères choisis dans le groupe comprenant : les acides aminés tels que la glycine, l'alanine, la sérine, la glutamine, la lysine, l'alanyl alanine, l'histidine, la L-histidyl-histidine, l'arginylarginine et leurs mélanges, , le bicarbonate de sodium, l'édétate trisodique, le citrate disodique
Le produit selon l'invention peut ne comporter qu'un seul amphotère, à condition qu'il présente d'une part un pK acide et d'autre part un pK basique répondant aux conditions précisées plus haut.
On peut citer en tant qu'amphotère de ce type la L-histidyl-histidine et l'arginylarginine.
Selon la présente invention, on entend par absorbants lipophiles, les absorbants ou superabsorbants qui sont notamment des produits polymères tels que le polyisonorbornène de la Société ATOCHEM, commercialisé sous la marque NORSOREX® et les produits ayant les dénominations suivantes: OIL ABSORBER de la Société SNF FLOERGER, GAMSORB de la Société GAMLEN INDUSTRIES SA, RHON'SEC granulé de la Société TOLSA FRANCE SA.
Ensuite, par absorbants hydrophiles, on entend les absorbants et superabsorbants hydrophiles, notamment les superabsorbants acryliques tels que le NORSOCRYL® S35 commercialisé par la Société ATOCHEM et les produits ayant les dénominations suivantes AQUALIC® LAW45 de la Société BASF, ASAP® 2000 et ASAP® 2003 de la Société CHEMDAL LTD., FAVOR Z1030 de la Société STOCKHAUSEN, DRYTECH 4535R de la Société DOW CHEMICALS, AQUASORB 3005K1 de la Société SNF FLOERGER, RHON'SEC granulé de la Société TOLSA FRANCE SA.
Le produit selon l'invention peut comprendre des additifs, notamment des colorants, des agents antistatiques, des agents de granulation, des agents de charge et leurs mélanges.
Le produit selon l'invention se présente sous la forme d'une poudre, de granules, de comprimés. Selon une réalisation particulière de l'invention, le produit absorbant et neutralisant est conditionné dans des emballages de formes et de dimensions appropriées de façon à obtenir par exemple des plaques ou des boudins facilitant la mise en oeuvre du produit. Lesdits emballages sont notamment constitués de treillis en matière plastique ou en non tissé.
Pour la mise en oeuvre du produit selon l'invention, l'ajout d'une certaine quantité d'eau peut parfois être nécessaire. C'est le cas notamment lorsque le liquide répandu est un acide fort. En effet, celui-ci ne contenant que très peu d'eau, il peut s'avérer nécessaire d'en ajouter afin que la réaction de neutralisation soit complète.
Lorsque le produit selon l'invention est appliqué sur le liquide à traiter, le produit gonfle et se solidifie. On obtient alors un résidu solide, plus ou moins compact selon la nature du liquide toxique, corrosif ou nuisible renversé. Ce résidu solide peut alors être facilement éliminé à l'aide par exemple d'une raclette, d'un balai, d'une pelle sans risque de brûlure ou d'irritation pour le manipulateur.

### Exemples :

Dans les exemples suivants, le produit selon l'invention est constitué par un mélange ayant la formule suivante, donnée pour 1 kg :

- 440,1 g de bicarbonate de sodium,
- 393,4 g de glycine,
- 83,3 g de NORSOCRYL S35, ,
- 83,3 g de NORSOREX APX1.

### Exemple 1 : utilisation du produit selon l'invention sur l'hydroxyde de potassium :

Sur une paillasse, on renverse 100ml d'hydroxyde de potassium (KOH) ayant la concentration indiquée dans le tableau 1 ci-dessous. On répand alors la poudre selon l'invention dans les quantités indiquées dans le tableau 1, tout d'abord autour de la flaque de KOH puis sur toute sa surface.

La poudre gonfle et se solidifie. Une mesure du pH à l'aide d'un papier pH montre que le résidu obtenu présente un pH dans les zones du pH neutre de 5,5 à 9,7.

Tableau 1 :

| Concentration de KOH en mol /l | Quantité de poudre selon l'invention en grammes |
|---|---|
| 18 | 1000 |
| 12 | 670 |
| 6 | 340 |
| 1 | 60 |

**Exemple 2 : Utilisation du produit selon l'invention sur l'ammoniaque.**

On recommence l'exemple 1 en remplaçant les 100 ml d'hydroxyde de potassium par 100 ml d'ammoniaque $NH_4OH$ dont les concentrations sont indiquées dans le Tableau 2.

Les quantités de poudre selon l'invention sont également précisées dans le tableau 2.

Tableau 2 :

| Concentration de $NH_4OH$ en mol /l | Quantité de poudre selon l'invention en grammes |
|---|---|
| 21 | 590 |
| 14 | 390 |
| 6 | 170 |
| 1 | 30 |

**Exemple 3 : Utilisation du produit selon l'invention sur l'acide sulfurique $H_2SO_4$**

Sur une paillasse, on renverse 100 ml de $H_2SO_4$ dont la concentration est indiquée dans le tableau 3 ci-dessous. On répand alors la poudre selon l'invention dans les quantités indiquées dans le tableau 3 autour de la flaque d'$H_2SO_4$ puis sur toute sa surface. Des bulles apparaissent et un résidu solide se forme. On ajoute alors quelques gouttes d'eau, le résidu gonfle et de nouvelles bulles apparaissent indiquant la fin de la neutralisation.

La mesure à l'aide d'un papier pH montre que le résidu solide formé est bien dans la zone de pH neutre de 5,5 à 9,7.

Tableau 3 :

| Concentration de $H_2SO_4$ en mol /l | Quantité de poudre selon l'invention en grammes |
|---|---|
| 18 | 1000 |
| 12 | 670 |
| 6 | 340 |
| 1 | 60 |

**Exemple 4 : Utilisation du produit selon l'invention sur l'acide nitrique $HNO_3$**

On recommence l'exemple 3 en remplaçant les 100 ml de $H_2SO_4$ par 100 ml de $HNO_3$.

Les quantités de poudre à verser sont indiquées pour chaque concentration de $HNO_3$ dans le tableau 4 suivant :

Tableau 4 :

| Concentration de $HNO_3$ en mol /l | Quantité de poudre selon l'invention en grammes |
|---|---|
| 21 | 590 |
| 14 | 390 |
| 6 | 170 |
| 1 | 30 |

Les mêmes quantités de poudre peuvent être utilisées dans le cas où un autre acide fort (tel que l'acide chlorhydrique, l'acide trichloroacétique) est renversé.

### Exemple 5 : Utilisation du produit selon l'invention sur l'acide acétique $CH_3COOH$

On recommence l'exemple 3 en remplaçant les 100 ml de $H_2SO_4$ par 100 ml de $CH_3COOH$.

Les quantités de poudre à verser sont indiquées pour chaque concentration de $CH_3COOH$ dans le tableau 5 suivant.

Tableau 5 :

| Concentration de $CH_3COOH$ en mol /l | Quantité de poudre selon l'invention en grammes |
|---|---|
| 18 | 220 |
| 6 | 80 |
| 1 | 12 |

### Revendications

**1.** Produit capable de transformer un produit liquide toxique, corrosif ou nuisible pour l'environnement en résidu non agressif ou non nuisible, comprenant :

- au moins un amphotère choisi de telle sorte que :

    - le pH du résidu obtenu soit dans la gamme de 5 à 10 et de préférence de 5,5 à 9,7,
    - le plus petit des pK acides de l'amphotère soit dans la gamme de 5 à 10 et de préférence de 5,5 à 9,7, et le plus grand des pK basiques de l'amphotère soit dans la gamme de 5 à 10, et de préférence de 5 à 8, et
    - le plus grand des pK basiques de l'amphotère soit inférieur au plus petit des pK acides,

- au moins un absorbant lipophile, et
- au moins un absorbant hydrophile.

**2.** Produit selon la revendication 1, **caractérisé par le fait qu'**il comprend au moins deux amphotères dans des proportions telles que le rapport de la somme du nombre de moles des amphotères ayant un pK acide dans la gamme de 5 à 10, et de préférence de 5,5 à 9,7, à la somme du nombre de moles des amphotères ayant un pK basique dans la gamme de 5 à 10, et de préférence de 5 à 8 soit compris entre 0,1 et 10.

**3.** Produit selon l'une des revendications 1 et 2, **caractérisé par le fait qu'**il comprend :

- de 20 à 60% en poids d'au moins un amphotère,
- de 2 à 20% en poids d'au moins un absorbant lipophile et,
- de 2 à 20% en poids d'au moins un absorbant hydrophile.

**4.** Produit selon l'une quelconque des revendications 1 à 3, **caractérisé par le fait que** l'amphotère est choisi dans le groupe comprenant les acides aminés tels que la glycine, l'alanine, la sérine, la glutamine, la lysine, l'alanyl alanine, l'histidine, la L-histidylhistidine, l'arginylarginine et leurs mélanges, le bicarbonate de sodium, l'édétate trisodique, le citrate disodique.

**5.** Produit selon l'une quelconque des revendications 1, 3 et 4 contenant en tant qu'amphotère unique la L-histidyl-histidine ou l'arginylarginine.

**6.** Produit selon l'une quelconque des revendications 1 à 5, **caractérisé par le fait que** l'absorbant lipophile est choisi dans le groupe comprenant notamment les produits vendus sous les dénominations NORSOREX APX1 de la Société ATOCHEM, OIL ABSORBER de la Société SNF FLOERGER, GAMSORB de la Société GAMLEN INDUSTRIES SA, RHON'SEC granulé de la Société TOLSA FRANCE SA.

**7.** Produit selon l'une quelconque des revendications 1 à 6, **caractérisé par le fait que** l'absorbant hydrophile est choisi dans le groupe comprenant notamment les polymères acryliques tels que NORSOCRYL S35 de la société ELF ATOCHEM et les produits vendus sous les dénominations AQUALIC® LAW45 de la Société BASF, ASAP® 2000 et ASAP® 2003 de la Société CHEMDAL LTD., FAVOR Z1030 de la Société STOCKHAUSEN, DRYTECH 4535R de la Société DOW CHEMICALS, AQUASORB 3005K1 de la Société SNF FLOERGER, RHON'SEC granulé de la Société TOLSA FRANCE SA.

**8.** Produit selon l'une quelconque des revendications 1 à 7, comprenant des additifs tels que des agents colorants, des agents de charge, des agents de granulation, des agents anti-statiques et leurs mélanges.

**9.** Produit selon l'une quelconque des revendications 1 à 8, **caractérisé par le fait qu'**il se présente notamment sous la forme d'une poudre, de granules, de comprimés ou de produits conditionnés dans des emballages, notamment constitués de treillis en matière plastique ou en non tissé, de formes et de dimensions appropriées de façon à obtenir par exemple des plaques ou des boudins facilitant la mise en oeuvre du produit.

**Patentansprüche**

**1.** Mittel mit der Befähigung zur Überführung eines toxischen, korrosiven oder umweltschädlichen flüssigen Produkts in einen nicht-aggressiven oder unschädlichen Rückstand, welches umfasst:

- mindestens eine amphotere Substanz, ausgewählt derart, dass:

- der pH-Wert des erhaltenen Rückstands im Bereich von 5 bis 10 und vorzugsweise von 5,5 bis 9,7,

- der kleinste der sauren pK-Werte der amphoteren Substanz im Bereich von 5 bis 10 und vorzugsweise von 5,5 bis 9,7 und der größte der basischen pK-Werte der amphoteren Substanz im Bereich von 5 bis 10 und vorzugsweise von 5 bis 8 und

- der größte der basischen pK-Werte der amphoteren Substanz unterhalb des kleinsten der sauren pK-Werte liegen,

- mindestens ein lipophiles Absorbiermittel und

- mindestens ein hydrophiles Absorbiermittel.

**2.** Mittel gemäß Anspruch 1, **dadurch gekennzeichnet, dass** es mindestens zwei amphotere Substanzen in Mengenanteilen umfasst, dass das Verhältnis der Summe der Anzahl der Mole der amphoteren Substanzen mit den sauren pK-Werten im Bereich von 5 bis 10 und vorzugsweise von 5,5 bis 9,7 zur Anzahl der Mole der amphoteren Substanzen mit den basischen pK-Werten im Bereich von 5 bis 10 und vorzugsweise von 5 bis 8 0,1 bis 10 beträgt.

**3.** Mittel gemäß einem der Ansprüche 1 und 2, **dadurch gekennzeichnet, dass** es umfasst:

- 20 bis 60 Gew.% mindestens einer amphoteren Substanz,

- 2 bis 20 Gew.% mindestens eines lipophilen Absorbiermittels und

- 2 bis 20 Gew.% mindestens eines hydrophilen Absorbiermittels.

**4.** Mittel gemäß einem der Ansprüche 1 bis 3, **dadurch gekennzeichnet, dass** die amphotere Substanz aus der Gruppe ausgewählt ist, umfassend Aminosäuren wie Glycin, Alanin, Serin, Glutamin, Lysin, Alanylalanin, Histidin, L-Histidylhistidin, Arginylarginin und deren Mischungen, Natriumbicarbonat, Trinatrium-EDTA und Dinatriumzitrat.

**5.** Mittel gemäß einem der Ansprüche 1, 3 und 4, enthaltend als einzige amphotere Substanz L-Histidylhistidin oder Arginylarginin.

**6.** Mittel gemäß einem der Anpsrüchel bis 5, **dadurch gekennzeichnet, dass** das lipophile Absorbiermittel aus der Gruppe ausgewählt ist, umfassend insbesondere die Produkte, die unter den Bezeichnungen NORSOREX APX1 von ATOCHEM, OIL ABSORBER von SNF FLOERGER, GAMSORB von GAMLEN INDUSTRIES SA und granuliertes RHON'SEC von TOLSA FRANCE SA verkauft werden.

7.  Mittel gemäß einem der Ansprüche 1 bis 6, **dadurch gekennzeichnet, dass** das hydrophile Absorbiermittel aus der Gruppe ausgewählt ist, umfassend Acrylpolymere wie NORSOCRYL S35 von ELF ATOCHEM und die Produkte, die unter den Bezeichnungen AQUALIC ® LAW45 von BASF, ASAP ® 2000 und ASAP ® 2003 von CHEMDAL LTD., FAVOR Z1030 von STOCKHAUSEN, DRYTECH 4535R von DOW CHEMICALS, AQUASORB 3005K1 von SNF FLOERGER und granuliertes RHON'SEC von TOLSA FRANCE SA verkauft werden.

8.  Mittel gemäß einem der Ansprüche 1 bis 7, umfassend Additive wie Farbstoffe, Beaufschlagungsmittel, Granuliermittel, antistatische Mittel und deren Mischungen.

9.  Mittel gemäß einem der Ansprüche 1 bis 8, **dadurch gekennzeichnet, dass** es insbesondere in der Form von Pulvern, Körnern, Tabletten oder von Produkten vorliegt, die in Verpackungen, insbesondere aus einem Gitterwerk aus Kunststoff oder Vlies, in Formen und Abmessungen zubereitet sind, die sich dazu eignen, beispielsweise Platten oder Rollen zu erhalten, die die Anwendung des Mittels erleichtern.

**Claims**

1.  A product capable of transforming a toxic, corrosive or environmentally harmful liquid product into a non-aggressive or harmless residue, comprising:

    -   at least one amphoteric selected in such a way that:

        -   the pH of the residue obtained is within the range of from 5 to 10, preferably from 5.5 to 9.7,
        -   the lowest of the acidic pK values of the amphoteric is within the range of from 5 to 10, preferably from 5.5 to 9.7, and the highest of the basic pK values of the amphoteric is within the range of from 5 to 10 and preferably from 5 to 8, and
        -   the highest of the basic pK values of the amphoteric is lower than the lowest of the acidic pK values,

    -   at least one lipophilic absorbent and
    -   at least one hydrophilic absorbent.

2.  A product as claimed in claim 1, **characterized by** the fact that it comprises at least two amphoterics in proportions such that the ratio of the sum of the number of moles of amphoterics having an acidic pK value in the range of from 5 to 10, and preferably from 5.5 to 9.7, to the sum of the number of moles of amphoterics having a basic pK in the range of from 5 to 10, and preferably from 5 to 8, is between 0.1 and 10.

3.  A product as claimed in any one of claims 1 and 2, **characterized by** the fact that it comprises:

    -   from 20 to 60% by weight of at least one amphoteric,
    -   from 2 to 20% by weight of at least one lipophilic absorbent and
    -   from 2 to 20% by weight of at least one hydrophilic absorbent.

4.  A product as claimed in any one of claims 1 to 3, **characterized by** the fact that the amphoteric is chosen from the group comprising the aminated acids such as glycine, alanine, serine, glutamine, lysine, alanyl alanine, histidine, L-histidylhistidine, arginylarginine and mixtures thereof, sodium bicarbonate, trisodium edetate, disodium citrate.

5.  A product as claimed in any one of claims 1, 3 and 4, containing L-histidylhistidine or arginylarginine as a single amphoteric.

6.  A product as claimed in any one of claims 1 to 5, **characterized by** the fact that the lipophilic absorbent is chosen from the group comprising the products sold under the names of NORSOREX APX1 by ATOCHEM, OIL ABSORBER by SNF FLOERGER, GAMSORB by GAMLEN INDUSTRIES SA, granulated RHON'SEC by TOLSA FRANCE SA.

7.  A product as claimed in any one of claims 1 to 6, **characterized by** the fact that the hydrophilic absorbent is chosen form the group comprising in particular the acrylic polymers, such as NORSOCRYL S35 sold by ELF ATOCHEM and the products sold under the names of AQUALIC® LAW45 by BASF, ASAP® 2000 and ASAP® 2003 by CHEMDAL LTD, FAVOR Z1030 by STOCKHAUSEN, DRYTECH 4535R by DOW CHEMICALS, AQUASORB 3005K1 by SNF FLOERGER, granulated RHON'SEC by TOLSA FRANCE SA.

8.  A product as claimed in any one of claims 1 to 7, containing additives such as coloring agents, fillers, granulating agents, anti-static agents and mixtures thereof.

9.  A product as claimed in any one of claims 1 to 8, **characterized by** the fact that it is in the form of a powder, granules, tablets or products packaged in packs, made in particular from a plastic or non-woven netting, in shapes and dimensions suitable for obtaining sheets or sausages making the product easier to use.